(19) Europäisches Patentamt

European Patent Office

Office européen des brevets

(11) Veröffentlichungsnummer: **0 066 638**
**B1**

(12) **EUROPÄISCHE PATENTSCHRIFT**

(45) Veröffentlichungstag der Patentschrift: **07.08.85**

(21) Anmeldenummer: **81104386.8**

(22) Anmeldetag: **06.06.81**

(51) Int. Cl.⁴: **G 01 M 1/24**

(54) **Schalter zur Beendigung der Verstellung einer Kurbelwelle beim Wuchtzentrieren.**

(43) Veröffentlichungstag der Anmeldung:
**15.12.82 Patentblatt 82/50**

(45) Bekanntmachung des Hinweises auf die
Patenterteilung:
**07.08.85 Patentblatt 85/32**

(84) Benannte Vertragsstaaten:
**AT DE FR GB IT SE**

(56) Entgegenhaltungen:
**DE-A-2 823 219**
**US-A-4 141 130**

(73) Patentinhaber: **CARL SCHENCK AG**
**Landwehrstrasse 55 Postfach 40 18**
**D-6100 Darmstadt (DE)**

(72) Erfinder: **Schönfeld, Harald, Ing.grad.**
**Aumühlenweg 1**
**D-8100 Darmstadt-Arheiligen (DE)**

(74) Vertreter: **Dallhammer, Herbert, Dipl.-Ing.**
**Carl Schenck AG Patentabteilung Postfach 4018**
**D-6100 Darmstadt (DE)**

EP 0 066 638 B1

Courier Press, Leamington Spa, England.

# 0 066 638

**Beschreibung**

Die Erfindung betrifft einen Schalter zur Beendigung einer Verstellung einer Kurbelwelle beim Wuchtzentrieren in einer Wuchtzentriermaschine, die ein Lagerbett und darauf über Federn abgestützt eine Schwingbrücke besitzt, in der die wuchtzuzentrierende Kurbelwelle um die Wuchtzentriermaschinenachse rotiert, und in der die Kurbelwellenachse zur Wuchtzentriermaschinenachse bis zu einem minimalen Rotationsradius jeweils eines Punktes der Oberfläche zweier ausgewählter um die Wuchtzentriermaschinenachse rotierender Kurbelwellenlager varlagerbar ist welche Schalter Fühler zum berührungslosen Messer des minimalen Rotationsradius aufweisen.

Durch die Offenlegungsschrift DE—A—28 23 219, die ein Verfahren und eine Vorrichtung zum Zentrieren von mit ungleicher Massenverteilung längs ihrer Schaftachse versehenen Rotationskörpern betrifft, ist eine Einrichtung der eingangs genannten Gattung bekannt geworden, bei der eine Ausgestaltung der Vorrichtung zur Durchführung des dort unter Schutz zu stellenden Verfahrens vorschlägt, daß die Oberfläche der die Schaftachse beinhaltenden rotationssymmetrischen Teile beim Umlauf radial mittels Fühler berührungslos abgetastet werden. Die Abtastung dient dem Zweck, eine Verstellung einer Kurbelwelle bis zu einem minimalen Rotationsradius eines Punktes der Oberfläche zweier ausgewählter, ohne systembedingte Exzentrizitäten, um die Wuchtzentriermaschinenachse rotierenden Kurbelwellenabschnitts zu gewährleisten. Wird eine derartige Abtastung nicht durchgeführt, so besteht die Gefahr, daß durch in einer rohen Kurbelwelle vorhandene extreme Unwucht zwar ein Zentrieren der Kurbelwelle entsprechend diesen Unwuchten mit entsprechenden Vorhalten möglich ist, jedoch bei einer späteren mechanischen Bearbeitung der Hauptlagerzapfen oder Kurbelzapfen, zufolge einer sich einstellenden großen geometrischen Exzentrizität der geometrischen Achse dar Kurbelwelle, Ausschuß entsteht, da der minimal zulässige Rotationsradius $r_e$ eines Punktes der Oberfläche das zu bearbeitenden Kurbelwellenabschnitts z.B. durch das Schrägstellen der geometrischen Kurbelwellenachse unterschritten wird.

Die in der genannten Offenlegungsschrift genannten weiteren Einrichtungen und Verfahren zum Wuchtzentrieren langgestreckter Körper wie Kurbelwellen, beinhalten keine Einrichtung zur Messung und Überwachung des minimalen Rotationsradius. Ausgehend von diesem Stand der Technik liegt der vorliegenden Erfindung die Aufgabe zu Grunde, beim Wuchtzentrieren sich einstellende große geometrische Exzentrizitäten, die einen Ausschuß bei der Fertigbearbeitung einer Kurbelwelle um die wuchtzentrierte Schaftachse hervorrufen, eindeutig zu vermeiden. Diese Aufgabe wird erfindungsgemäß dadurch gelöst, daß die Fühler zwei an der Schwingbrücke angeordnete Sender für scharf gebündeltes Licht aufweisen, die jeweils einen Lichtstrahl ihnen gegenüberliegenden Empfängern, die ebenfalls an der Schwingbrücke angeordnet sind, zusenden, und daß die Lichtstrahlen im Abstand des Minimalradius die Wuchtzentriermaschinenachse im Bereich jeweils eines kurbelwellenlagers kreuzen, und daß bei erstem Lichtempfang eines Empfängers über ein Kurbelwellenlager ein Abschaltimpuls erzeugt wird, um die Verlagerung der kurbelwellenachse zu beenden. Der Erfindungsgemäße Schalter ermöglicht somit die augenblickliche Lage der wuchtzuzentrierenden Kurbelwelle als Abschaltimpuls zu verwenden, und auch wenn der überwachte Abstand der Kurbelwelle durch Zusatzaggregate bei Rotation beschattet wird. Damit wird ein Ausschuß bei der nachfolgenden mechanischen Bearbeitung dar Kurbelwelle, hervorgerufen durch eine große geometrische Exzentrizität, vermieden. Durch die Anordnung des Senders und Empfängers für scharf gebündeltes Licht an der Schwingbrücke, ist eine Beeinflussung des Schaltstrahls durch überlagerte Bewegung nicht möglich.

Eine Ausgestaltung der Erfindung besteht darin, daß zur Erfassung der Krümmung der Kurbelwelle mindestens eine weitere Sende- und Empfangsanordnung für scharf gebündeltes Licht vorgesehen ist. Durch diese erfinderische Ausgestaltung wird es ermöglicht, daß auch "krumme" Kurbelwellen wuchtzentriert werden können, und somit einer Weiterbearbeitung zugeführt werden können, da durch die Überwachung der bereits krummen Kurbelwelle und bei Einstellen großer geometrischer Exzentrisitäten die Krümmung durch diesen weiteren Lichtschalter mit überwacht wird, und auch bei diesem sofort ein Abschalten des Verstellvorganges stattfindet, wenn bei noch ausreichender Materialmenge an den anderen Stellen der Kurbelwelle zufolge Krümmung der Kurbelwelle ein Lichtstrahl den entsprechenden Empfänger erreicht.

In noch weiterer Ausgestaltung des Erfindungsgegenstandes wird vorgeschlagen, daß die Lichtstrahlen die Wuchtzantriermaschinenachse schiefwinklig kreuzen. Durch diese Ausgestaltung wird eine Flexibilität beim Anbau ermöglicht und gleichzeitig erreicht, eventuelle Schattenbildner auszuschalten.

In den nachfolgenden Zeichnungen wird die Erfindung näher erläutert.

Es zeigen:

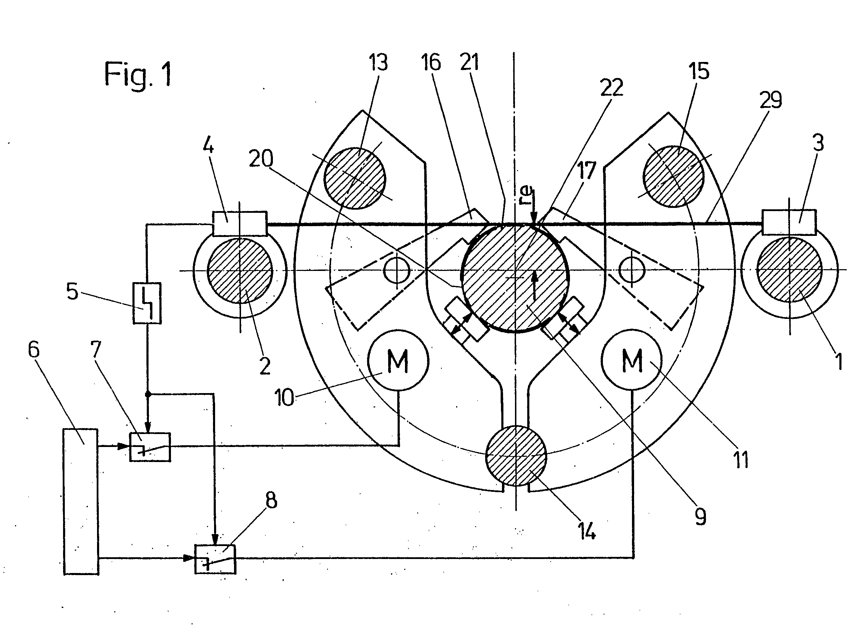

Figur 1, einen Querschnitt durch die Schwingbrücke einer Wuchtzentriermaschine.

Figur 2, eine Draufsicht auf die Schwingbrücke mit eingelagerter Kurbelwelle.

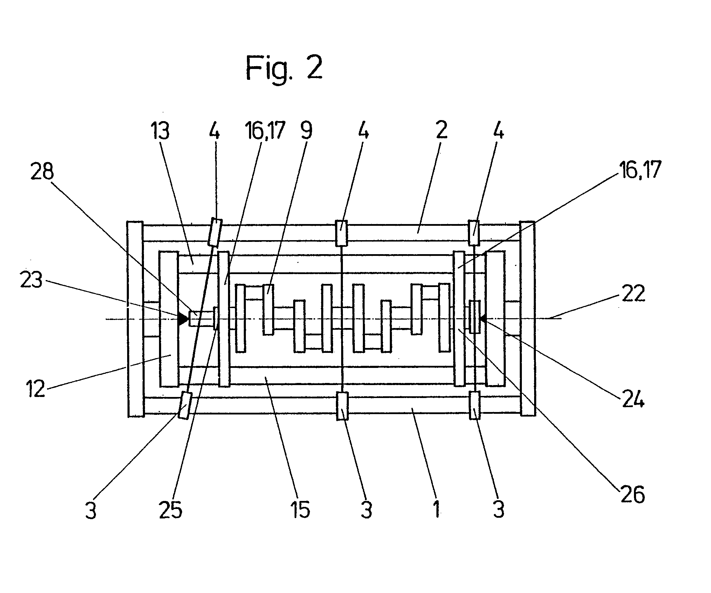

An einem Schwingrahmen 1, 2 ist ein Sender 3 und gegenüberliegend ein Empfänger 4 angeordnet. Bei dem scharf gebündelten Licht kann es sich um einen Laserstrahl handeln, der in einem als Empfänger ausgebildeten Fotoelement aufgenommen wird, und der bei Erhalt eines Lichtimpulses über einen Schwellwertschalter 5 in die Unwuchtmeßeinrichtung 6 der Wuchtzentriermaschine derartig eingreift, daß über Schalter 7, 8 die die Verstellung einer Kurbelwelle 9 bewirkenden Schrittmotoren 10, 11 sofort gestoppt werden, und die Kurbelwelle 9 in dieser Lage arretiert, an ihran Wellenstirnflächen durch in der Wuchtzentriermaschinenachse 22 wirkende Bohrer 23, 24, zentriert wird (siehe Figur 2).

2

Im dargestellten Ausführungsbeispiel wird die Kurbelwelle in einem sogenannten Käfig 12 (siehe Figur 2) eingelagert. Der Käfig 12 ist mit Längsholmen 13, 14 und 15 versehen, die sich über die gesamte Länge der zu untersuchenden Kurbelwelle 9 erstrecken. An diesem Käfig sind die Motoren 10 und 11 sowie Gegenhalter 16, 17 angeordnet. Hierbei ist für jede der Verstellebenen 25, 26 ein Paar Motoren 10 und 11 und ein Paar Gegenhalter 16, 17 vorgesehen, um die Kurbelwelle in ihrer gesamten Länge entsprechend der gemessenen statischen und dynamischen Unwuchten räumlich bei Rotation solange verstellen zu können, bis unter Beachtung des erfindungsgemäßen Schalters die Unwucht in der vorgeschriebenen Weise ausgeschaltet wird. Es hat sich ergeben, daß die von den Längsholmen 13, 14 und 15 auf der Kurbelwelle erzeugten Schatten—im Ausführungsbeispiel wurden zwei Schatten mit den Bezugsziffern 20 und 21 bezeichnet—nur einen vernachlässigbaren Einfluß auf die Funktion des erfindungsgemäßen Schalters haben.

Wie in Figur 2 dargestellt, wird der Endzapfen 28 der Kurbelwelle 9 von einem schräg verlaufenden Sender-Empfängersystem abgetastet. Die Justierung des Empfängersystems 3, 4 geschieht jeweils so, daß diese an der Schwingbrücke so angeordnet sind, daß der scharf gebündelte Lichtstrahl 29 die Wuchtzentriermaschinenachse 22 in dem vorgegebenem minimalen Abstand $r_e$ kreuzt.

### Patentansprüche

1. Schalter zur Beendigung der Verstellung einer Kurbelwelle (9) beim Wuchtzentrieren in einer Wuchtzentiermaschine, die ein Lagerbett und darauf über Federn abgestützt eine Schwingbrücke (1, 2) besitzt, in der die wuchtzuzentrierende Kurbelwelle (9) um die Wuchtzentriermaschinenachse (22) rotiert und in der Kurbelwellenachse zur Wuchtzentriermaschinenachse (22) bis zu einem minimalen Rotationsradius ($r_e$) jeweils eines Punktes der Oberfläche zweier ausgewählter um die Wuchtzentriermaschinenachse rotierender Kurbelwellenlager verlagerbar ist, welche Schalter Fühler (3, 4) zum berührungslosen Messen des minimalen Rotationsradius ($r_e$) aufweisen dadurch gekennzeichnet, daß die Fühler zwei an der Schwingbrücke (1, 2) angeordnete Sender (3) für scharf gebündeltes Licht (29) aufweisen, die jeweils einen Lichtstrahl (29) ihnen gegenüberliegenden Empfängern (4), die ebenfalls an der Schwingbrücke (1, 2) angeordnet sind, zusenden, und daß die Lichtstrahlen (29) im Abstand des Minimalradius ($r_e$) die Wuchtzentriermaschinenachse (22) in Bereich jeweils eines Kurbelwellenlagers kreuzen, und daß bei erstem Lichtempfang eines Empfängers (4) über ein Kurbelwellenlager ein Abschaltimpuls erzeugt wird, um die Verlagerung der Kurbelwellenachse zu beenden.

2. Schalter nach Anspruch 1, dadurch gekennzeichnet, daß zur Erfassung der Krümmung der Kurbelwelle (9) mindestens eine weitere Sende- und Empfangsanordnung (3, 4) für scharf gebündeltes Licht (29) vorgesehen ist.

3. Schalter nach Anspruch 1 und 2, dadurch gekennzeichnet, daß die Lichtstrahlen (29) die Wuchtzentriermaschinenachse (22) schiefwinklig kreuzen.

### Revendications

1. Interrupteur pour terminer le réglage en position d'un vilebrequin (9) lors de son équilibrage dans une machine d'équilibrage qui comprend un banc sur lequel s'appuie par l'intermédiaire de ressorts un pont oscillant (1, 2) dans lequel le vilebrequin (9) à équilibrer tourne autour de l'axe (22) de la machine d'équilibrage et dans lequel l'axe du vilebrequin peut être déplacé par rapport à l'axe (22) de la machine d'équilibrage jusqu'à un rayon de rotation minimal ($r_e$) d'un point respectif de la surface de deux paliers de vilebrequin sélectionnés tournant autour de l'axe de la machine d'équilibrage, cet interrupteur comportant des détecteurs (3, 4) pour mesurer sans contact le rayon de rotation minimal ($r_e$), caractérisé en ce que les détecteurs comportent deux émetteurs (3) pour de la lumière fortement focalisée (29) disposés sur le point oscillant (1, 2) lesquels envoient respectivement un rayon lumineux (29) à des récepteurs (4) leur faisant face, qui sont également disposés sur le pont oscillant (1, 2), que les rayons lumineux (29) croisent l'axe (22) de la machine d'équilibrage à une certaine distance du rayon minimal ($r_e$), respectivement dans la zone d'un palier de vilebrequin, et qu'à la première réception de lumière d'un récepteur (4), une impulsion d'arrêt est produite par l'intermédiaire d'un palier de vilebrequin pour terminer le déplacement de l'axe du vilebrequin.

2. Interrupteur selon la revendication 1, caractérisé en ce que, pour détecter la courbure du vilebrequin (9), il est prévu au moins un second ensemble émetteur, récepteur (3, 4) pour lumière fortement focalisée.

3. Interrupteur selon la revendication 1, caractérisé en ce que les rayons lumineux (29) croisent l'axe (22) de la machine d'équilibrage en oblique.

### Claims

1. Switches for terminating the displacement of a crankshaft (9) during the balance centring in a balance centring machine, which has a bearing bed and a rocking bridge (1, 2) which is supported thereon via springs and in which the crankshaft (9) to be balance-centred rotates about the axis (22) of the balance centring machine and in which the crankshaft axis is displaceable in relation to the axis (22) of the balance centring machine up to a minimum radius of rotation ($r_e$) of a point of the surface of each of two selected crankshaft bearings rotating about the axis of the balance centring machine, which switches comprise sensors (3, 4) for the contactless measurement of the minimum radius of rotation ($r_e$), characterised in that the sensors comprise two transmitters (3) for sharply concentrated light (29), which are disposed on the rocking bridge (1, 2) and each of which transmits a beam of light (29) to receivers (4) which are situated opposite them and which are likewise disposed on the rocking bridge (1, 2), and that the beams of light (29) cross, the axis (22) of the balance centring machine in the region of a crankshaft bearing in each case, at the distance of the minimum radius ($r_e$), and that on the first reception of light by a receiver (4), a switching-off pulse is produced via a crankshaft bearing in order to terminate the displacement of the crankshaft axis.

2. Switches as claimed in Claim 1, characterised in that at least one further transmitting and receiving device (3, 4) for sharply concentrated light (29) is provided to detect the curvature of the crankshaft (9).

3. Switches as claimed in Claims 1 and 2, characterised in that the beams of light (29) cross the axis (22) of the balance centring machine at an oblique angle.

4

Fig. 1

# Fig. 2